# EUROPÄISCHE PATENTSCHRIFT

(11) **EP 2 343 201 B1**
(45) Veröffentlichungstag und Bekanntmachung des Hinweises auf die Patenterteilung: **25.06.2014**
(21) Anmeldenummer: 11150562.4
(22) Anmeldetag: 11.01.2011
(51) Int. Cl.: B60D 1/06, B60D 1/28, B60D 1/36

(54) **Anhängekupplung**
Tow bar
Attelage

(30) Priorität: 11.01.2010 DE 102010000786
(43) Veröffentlichungstag der Anmeldung: 13.07.2011
(73) Patentinhaber: Jost-Werke GmbH, 63263 Neu-Isenburg (DE)
(72) Erfinder: Szczepanek, Udo, 82223, Eichenau (DE)
(74) Vertreter: Herzog, Markus

(56) Entgegenhaltungen:
- EP-A1- 0 983 880
- EP-A1- 1 138 529
- DE-U1- 9 113 527
- DE-U1- 20 002 819
- FR-A1- 2 925 396
- US-A1- 2005 230 935

## Beschreibung

Die Erfindung betrifft eine Anhängekupplung für ein Zugfahrzeug, umfassend einen Grundkörper, eine Kupplungseinheit mit einem Kupplungselement, welches zum Zusammenwirken mit einem Gegenkupplungselement eines Nachlauffahrzeugs bestimmt ist, wobei die Kupplungseinheit relativ zu dem Grundkörper zwischen einer Kupplungsstellung und einer Lösestellung verstellbar ist, und eine Sicherungsvorrichtung mit einem Sicherungselement, welches zwischen einer Sicherungsstellung und einer Freigabestellung verstellbar ist, wobei es in seiner Sicherungsstellung die Kupplungseinheit in deren Kupplungsstellung sichert.

Bereits an dieser Stelle sei darauf hingewiesen, dass im Rahmen der vorliegenden Erfindung unter einer "Stellung" eine stabile Lage verstanden wird, die ein Körper einnehmen kann und in der er verharrt, solange keine weiteren äußeren Ereignisse eintreten, die ihn wieder aus dieser stabilen Lage lösen. Ein einfacher federvorgespannter Raststift, wie er beispielsweise aus der EP 1 586 469 A1 bekannt ist, hat nach diesem Verständnis zwar eine Sicherungsstellung, in der er die Kupplungseinheit in deren Kupplungsstellung zu sichern vermag, aber keine Freigabestellung, in der er eine Überführung der Kupplungseinheit aus deren Kupplungsstellung in deren Lösestellung zulässt. Er würde nämlich nach seinem Zurückziehen unter dem Einfluss der Federvorspannung sofort wieder in die Rastausnehmung der Kupplungseinheit zurückkehren und somit die Überführung der Kupplungseinheit aus deren Kupplungsstellung in deren Lösestellung verhindern.

Eine gattungsgemäße Anhängekupplung ist beispielsweise aus der DE 10 2006 011 676 A1 bekannt. Bei dieser Anhängekupplung tritt beim Ankuppeln eines Nachlauffahrzeugs das Gegenkupplungselement unmittelbar mit einem Bauteil der Sicherungsvorrichtung in Kontakt, um die Überführung des Kupplungselements aus der Freigabestellung in die Kupplungsstellung zu veranlassen. Da die Lage und die Orientierung des Gegenkupplungselements relativ zur Anhängekupplung und damit auch zur Sicherungsvorrichtung dabei zum einen von der Art des Nachlauffahrzeugs und zum anderen von dessen Orientierung relativ zum Zugfahrzeug abhängen, kann es in der Praxis zu Ankuppelvorgängen kommen, bei denen das Gegenkupplungselement nicht in der Lage ist, die Sicherungsvorrichtung ordnungsgemäß auszulösen.

Demgegenüber ist es Aufgabe der vorliegenden Erfindung eine Anhängekupplung der eingangs genannten Art derart weiterzubilden, dass die Zuverlässigkeit des Ankuppelvorgangs weiter erhöht wird.

Diese Aufgabe wird durch eine Anhängekupplung der eingangs genannten Art gelöst, bei welcher das Sicherungselement in seiner Freigabestellung eine Überführung der Kupplungseinheit aus deren Kupplungsstellung in deren Lösestellung zulässt, und bei welcher das Sicherungselement durch die Kupplungseinheit im Verlauf von deren Bewegung aus der Lösestellung in die Kupplungsstellung aus der Freigabestellung ausgelenkt und in einen Sicherungsstellungsvorbereitungszustand übergeführt wird und dann, wenn die Kupplungseinheit die Kupplungsstellung erreicht hat, selbsttätig in die Sicherungsstellung übergeht. Erfindungsgemäß wird die Sicherüngsvorrichtung also durch ein der Anhängekupplung angehörendes Element ausgelöst, nämlich die Kupplungseinheit, das im Grundkörper der Anhängekupplung sicher geführt ist und somit in der Anhängekupplung einem vordefinierten und zuverlässig reproduzierbaren Bewegungsablauf folgt.

Ein konstruktiv einfacher, in seiner Funktion aber wirkungsvoller Aufbau der Sicherungsvorrichtung kann dadurch erzielt werden, dass an dem Sicherungselement ein Auslöseelement bewegbar gelagert ist, welches in eine Anschlagstellung vorgespannt ist, wobei das Auslöseelement von der Kupplungseinheit bei deren Bewegung aus der Kupplungsstellung in die Lösestellung unter Belassung des Sicherungselements in dessen Freigabestellung aus der Anschlagstellung ausgelenkt wird, während es bei einer Bewegung der Kupplungseinheit aus deren Lösestellung in deren Kupplungsstellung relativ zum Sicherungselement in der Anschlagstellung verharrt und das Sicherungselement in den Sicherungsstellungsvorbereitungszustand überführt. Auch bei der bekannten Anhängekupplungen ist ein Auslöseelement vorgesehen. Dieses ist aber am Grundkörper der Anhängekupplung bewegbar gelagert und kann daher nicht so unmittelbar auf den Sicherungshebel einwirken, wie dies ein am Sicherungselement bewegbar gelagertes Auslöseelement vermag.

In an sich bekannter Weise ist es auch bei der erfindungsgemäßen Anhängekupplung vorteilhaft, wenn die Sicherungsvorrichtung ferner ein Sperrelement umfasst, welches zwischen einer Verriegelungsstellung und einer Entriegelungsstellung verstellbar ist, wobei das Sperrelement in seiner Verriegelungsstellung das Sicherungselement in dessen Sicherungsstellung hält, und bei seiner Verstellung in die Entriegelungsstellung das Sicherungselement in dessen Freigabestellung überführt. Durch ein derartiges Sperrelement kann insbesondere im Fahrbetrieb sichergestellt werden, dass sich das Sicherungselement nicht unbeabsichtigt und selbsttätig aus der Sicherungsstellung herausbewegt. Dabei kann das Sperrelement in seiner Entriegelungsstellung an dem Sicherungselement verrastet ist, wobei diese Verrastung vorzugsweise bei der Überführung des Sicherungselements aus seiner Freigabestellung in den Sicherungsstellungsvorbereitungszustand gelöst werden kann.

Die Betriebssicherheit der Anhängekupplung kann weiter dadurch erhöht werden, dass das Sperrelement in seine Verriegelungsstellung vorgespannt ist.

Unabhängig davon, ob das Sperrelement von Hand oder unter der Wirkung einer Vorspannung in die Verriegelungsstellung verstellt wird, kann die Betriebssicherheit der Anhngerkupplung auch dadurch weiter erhöht werden, dass das Sperrelement bei seiner Verstellung in die Verriegelungsstellung das Sicherungselement in dessen Sicherungsstellung überführt.

Für die Verstellung des Sperrelements aus der Verriegelungsstellung in die Entriegelungsstellung können geeignete Antriebsmittel vorgesehen sein. Diese Antriebsmittel können beispielsweise von einem Handbetätigungshebel gebildet sein, auf dessen Schwenkachse das Sperrelement drehfest angeordnet ist.

Eine weitere Vereinfachung des konstruktiven Aufbaus der erfindungsgemäßen Anhängekupplung kann dadurch erzielt werden, dass eine Vorspannvorrichtung, vorzugsweise eine Vorspannfeder, vorgesehen ist, welche wenigstens zwei der folgenden Funktionen übernimmt, vorzugsweise alle diese Funktionen:
a) das Auslöseelement in dessen Anschlagstellung vorspannt,
b) das Sperrelement in seine Verriegelungsstellung vorspannt, und
c) den Eingriff von Sperrelement und Sicherungselement sichert.

Eine weitere Vereinfachung des konstruktiven Aufbaus der erfindungsgemäßen Anhängekupplung kann auch dadurch erzielt werden, dass das Sicherungselement am Grundkörper schwenkbar gelagert ist oder/und dass das Auslöseelement am Sicherungselement schwenkbar gelagert ist oder/und dass das Sperrelement am Grundkörper schwenkbar gelagert ist.

Um für eine Bedienungsperson eine zuverlässige Information über den Betriebszustand der Anhängekupplung bereitstellen zu können, wird vorgeschlagen, dass eine Anzeigevorrichtung vorgesehen ist, welche anzeigt, ob sich das Sicherungselement in der Sicherungsstellung befindet. Dabei kann die die Anzeigevorrichtung beispielsweise einen Anzeigestift umfassen, der durch das Sicherungselement aus einer Stellung auslenkbar ist, in welcher er anzeigt, dass sich das Sicherungselement in der Sicherungsstellung befindet. Ferner kann der Anzeigevorrichtung, beispielsweise deren Anzeigestift, eine Sensoreinheit zugeordnet sein, wobei das Ausgangssignal der Sensoreinheit beispielsweise zum Zwecke einer Fernanzeige der Stellung der Sicherungsvorrichtung verwendet werden kann.

Zur Erhöhung der Sicherheit kann die erfindungsgemäße Anhängekupplung ferner über zwei redundante Sicherungsvorrichtungen verfügen. Obgleich dies bevorzugt ist, brauchen die beiden Sicherungsvorrichtungen nicht vollständig getrennt voneinander ausgebildet zu sein. Vielmehr ist es denkbar, dass das Sperrelement den Sicherungselementen beider Sicherungsvorrichtungen gemeinsam zugeordnet ist.

Wenn in der vorstehenden oder auch der nachfolgenden Beschreibung Orientierungsangaben und Richtungsangaben verwendet werden, beispielsweise "vertikal", "horizontal", "oben", "unten", "vorne", "hinten", "rechts", "links" und dergleichen, so beziehen sich diese auf den normalen Betriebszustand der Anhängekupplung, in welchem sie an einem Zugfahrzeug montiert ist, wobei "vorne" mit der üblichen Fahrtrichtung des Zugfahrzeugs zusammenfällt.

Die Erfindung wird im folgenden an einem Ausführungsbeispiel mit Bezug auf die beigefügte Zeichnung näher erläutert werden. Es stellt dar:
- Figur 1: eine geschnittene Seitenansicht einer erfindungsgemäßen Anhängekupplung, gemäß der sich die Kupplungseinheit in der Kupplungsstellung befindet;
- Figur 2: eine Seitenansicht der Anhängekupplung gemäß Figur 1 allerdings ohne Gegenkupplungselement;
- Figur 3: eine geschnittene Seitenansicht der Anhängekupplung gemäß Figur 1, in der sich die Kupplungseinheit in der Lösestellung befindet und sich das Gegenkupplungselement in einer tiefen Lage an die Anhängekupplung annähert;
- Figur 4: eine geschnittene Seitenansicht ähnlich Figur 3, wobei sich jedoch das Kupplungselement in einer hohen Lage an die Anhängekupplung annähert;
- Figur 5: eine Seitenansicht der Anhängekupplung gemäß Figuren 3 und 4 allerdings ohne Gegenkupplungselement, jedoch mit arretiertem Fangmaul;
- Figur 6: eine Draufsicht auf die erfindungsgemäßen Anhängekupplung;
- Figur 7: eine entgegen der Fahrtrichtung des Zugfahrzeugs genommene Schnittansicht der Kupplungseinheit und der mit dieser verbundenen Elemente; und
- Fig. 8a-8f: Darstellungen zur Erläuterung von Aufbau und Funktion der Sicherungsvorrichtung der erfindungsgemäßen Anhängekupplung.

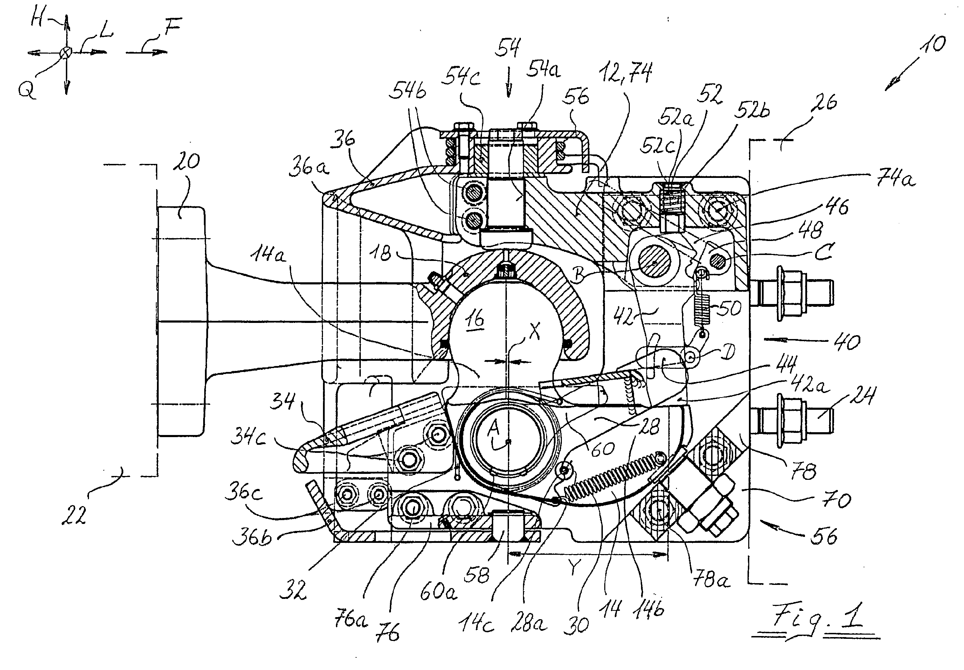

In Figur 1 ist eine erfindungsgemäßen Anhängekupplung allgemein mit 10 bezeichnet. Die Darstellung der Figur 1 zeigt eine seitliche Schnittansicht der Anhängekupplung 10, wobei die "oben-unten"-Richtung der Zeichenebene der Hochachse H der Anhängekupplung 10 entspricht, die "rechts"-Richtung der Zeichenebene der Fahrtrichtung F des Zugfahrzeugs entspricht, d.h. die "links-rechts"-Richtung der Zeichenebene der Längsachse L der Anhängekupplung 10 entspricht, und die orthogonal zur Zeichenebene verlaufende Richtung der Querachse Q der Anhängekupplung 10 entspricht.

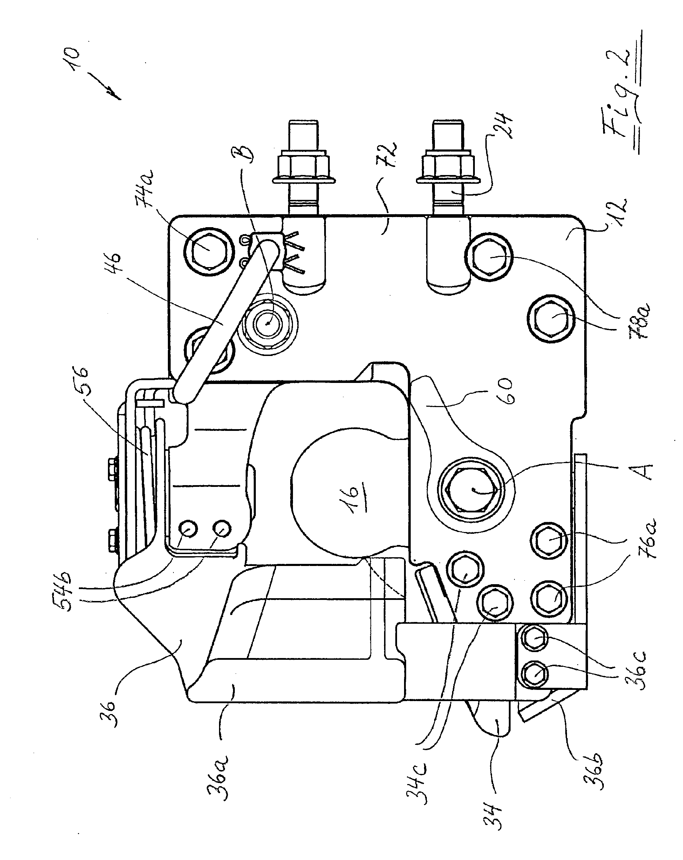

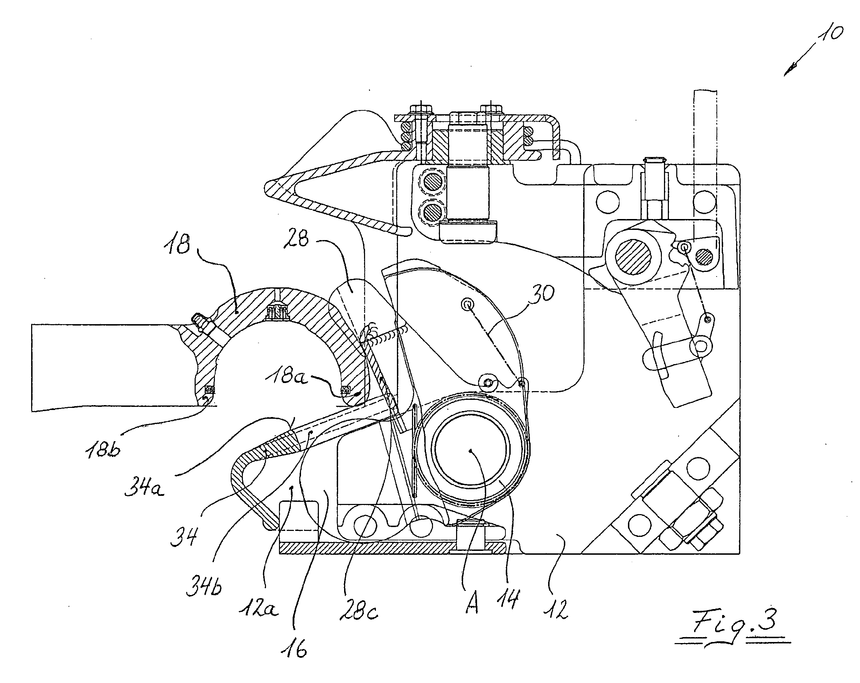

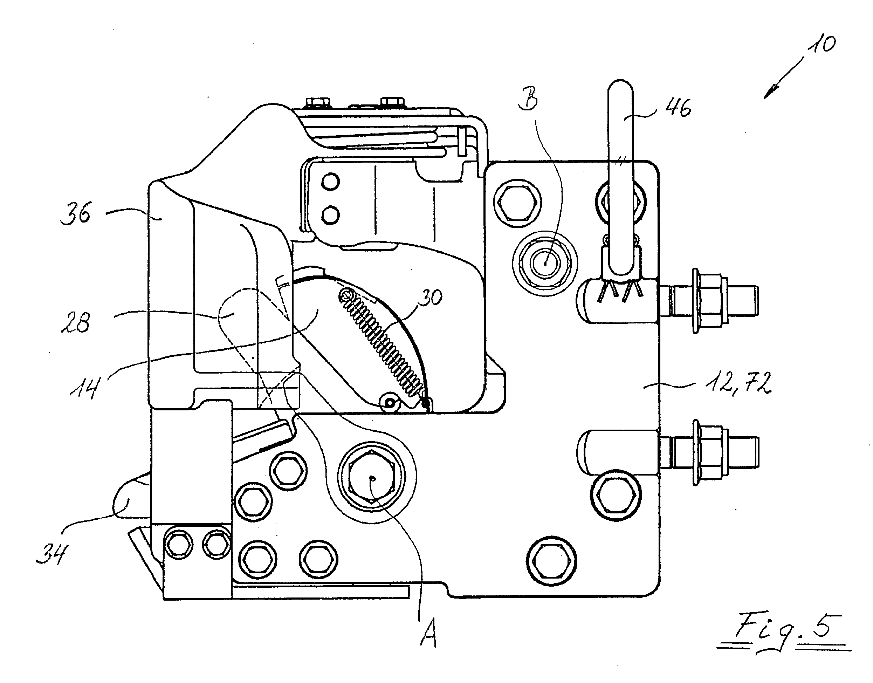

In einem Grundkörper 12 der Anhängekupplung 10 ist eine Kupplungseinheit 14 um eine im Wesentlichen in Querrichtung Q verlaufende Achse A zwischen einer Kupplungsstellung (siehe Figuren 1 und 2) und einer Lösestellung (siehe Figuren 3, 4 und 5) schwenkbar gelagert. Die Kupplungseinheit 14 umfasst ein Kupplungselement 16, im vorliegenden Fall einen Kugelkopf, der zum Zusammenwirken mit einem Gegenkupplungselement 18, im vorliegenden Fall eine Kugelpfanne, bestimmt und ausgebildet ist. Die Kugelpfanne 18 ist Teil einer Deichsel 20 eines in Figur 1 lediglich grob schematisch angedeuteten Nachlauffahrzeugs 22. In analoger Weise ist die Anhängekupplung 10 über Befestigungsbolzen 24 an einem in Figur 1 lediglich grob schematisch angedeuteten Zugfahrzeug 26 angebracht.

Die Anhängekupplung 10 umfasst ferner ein Mitnehmerelement 28, das ebenfalls um die Schwenkachse A schwenkbar gelagert ist. Eine Zugfeder 30 greift mit ihrem einen Ende unterhalb der Schwenkachse A an dem Mitnehmerelement 28 an und mit ihrem anderen Ende an der Kupplungseinheit 14. Die Kupplungseinheit 14 ist L-förmig ausgebildet, wobei an dem freien Ende des einen L-Stegs 14a der Kugelkopf 16 angeordnet ist und dem freien Ende des anderen L-Stegs 14b benachbart der Angriffspunkt für die Zugfeder 30 angeordnet ist. Auf diese Weise wird das Mitnehmerelement 28 von der Zugfeder 30 dann, wenn auf das Mitnehmerelement 28 ansonsten keine anderen äußeren Kräfte einwirken, mit einer Schulter 28a in Anlage gegen einen Anschlagstift 14c der Kupplungseinheit 14 gezogen.

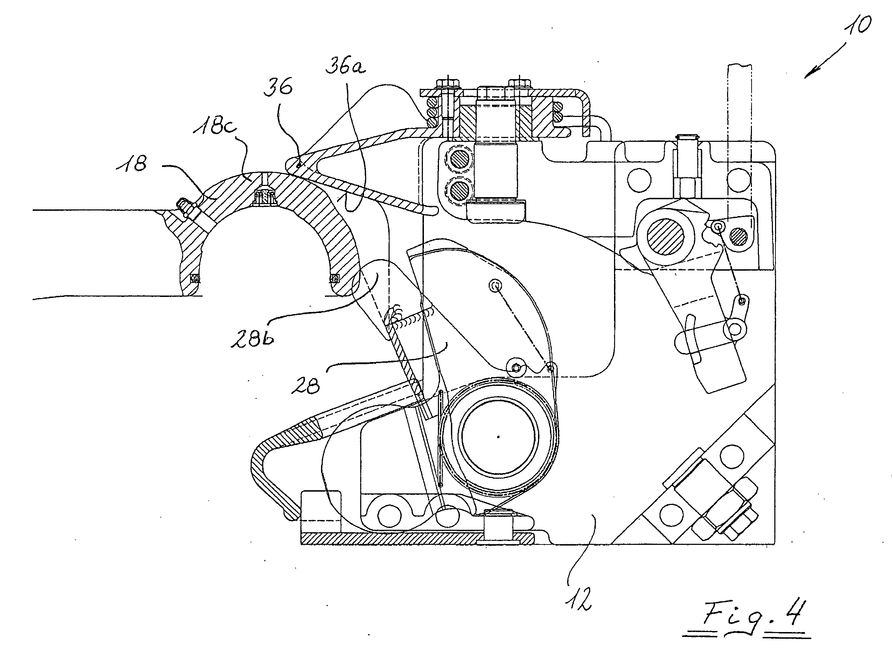

Die Schwenkachse A ist ferner von einer Drehfeder 32 umgeben, deren eines Ende am Grundkörper 12 angreift und deren anderes Ende am Mitnehmerelement 28 angreift. Die Drehfeder 32 ist dabei derart angeordnet, dass sie das Mitnehmerelement 28 in Figur 1 entgegen dem Uhrzeigersinn vorspannt. Kann das Mitnehmerelement 28 dieser Vorspannung folgen, weil auf es keine weiteren äußeren Kräfte einwirken, so wird es unter der Vorspannung der Drehfeder 32 in die in den Figuren 3 und 4 dargestellte Stellung übergeführt und nimmt im Zuge dieser Bewegung infolge des Zusammenwirkens der Schulter 28a mit dem Anschlagstift 14c die Kupplungseinheit 14 in deren Lösestellung mit.

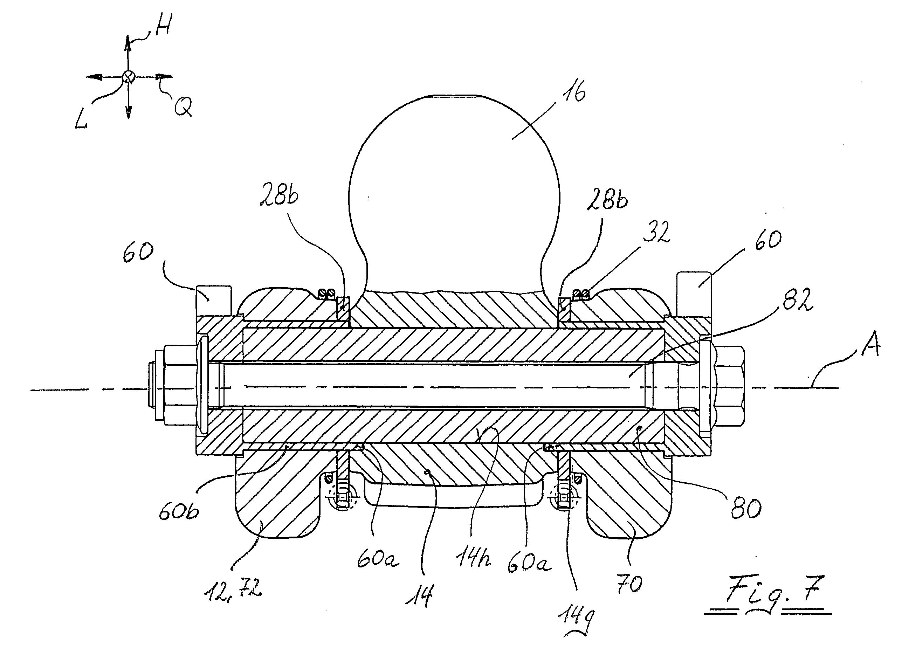

Nachzutragen ist noch, dass das Mitnehmerelement 28 zwei Seitenteile 28b und ein die beiden Seitenteile verbindendes Brückenteil 28c aufweist, wobei es mit den beiden Seitenteilen 28b, wie in Figur 7 dargestellt ist, beidseits der Kupplungseinheit 14 auf der Schwenkachse A schwenkbar gelagert ist. In dem dargestellten Ausführungsbeispiel ist das Mitnehmerelement 28 als Stanz-Biegeteil aus Metallblech gefertigt. Wie in Figur 1 grob schematisch durch Kräuselungen angedeutet ist, kann das Mitnehmerelement 28 erforderlichenfalls auch durch aufgeschweißte Blechelemente verstärkt sein. Das Mitnehmerelement 28 kann jedoch auch als Schmiedeteil hergestellt oder aus einer Mehrzahl von Einzelteilen zusammengesetzt sein, die beispielsweise durch Schrauben, Nieten, Schweißen oder dergleichen miteinander verbunden sind.

An dieser Stelle sei darauf hingewiesen, dass jedem der beiden Seitenteile 28b des Mitnehmerelements 28 eine gesonderte Feder 30 zugeordnet ist. Entsprechend weist die Kupplungseinheit 14 sowohl auf ihrer in Fahrtrichtung F rechten als auch auf ihrer linken Seite jeweils eine Angriffsstelle für eine Feder 30 und jeweils einen Anschlagstift 14c auf, und verfügt jedes der Seitenteile 28b über einen Anschlag 28a.

Wird die Kugelpfanne 18, wie in Figur 3 dargestellt ist, in einer relativ tiefen Lage relativ zur Anhängekupplung 10 an diese herangeführt, so läuft sie mit ihrem vorderen Ende 18a gegen die schräg nach oben weisende Fläche 34a einer Auffahrrampe 34 an. An dieser Fläche 34a gleitet die Kugelpfanne 18 entlang, bis sie gegen das Brückenteil 28c des Mitnehmerelements 28 stößt. Bei der weiteren Bewegung der Kugelpfanne 18 in den Gehäusekörper 12 hinein nimmt die Kugelpfanne 18 das Mitnehmerelement 28 mit und verschwenkt es im Uhrzeigersinn um die Achse A. Infolge dieser Schwenkbewegung wird die Feder 30 gespannt, bis die Spannkraft ausreicht, um die Kupplungseinheit 14 mitzunehmen, d.h. ebenfalls im Uhrzeigersinn um die Achse A zu verschwenken. Sollte es im Zuge dieser Bewegung einmal zu einer Situation kommen, die bei der aus der EP 1 586 469 A1 bekannten Anhängekupplung zu einer Zwangsstellung zwischen der Kupplungseinheit 14, insbesondere deren Kugelkopf 16, und der Kugelpfanne 18 führen würde, so kann sich bei der erfindungsgemäßen Anhängekupplung 10 gleichwohl das Mitnehmerelement 28 unter dem Einfluss der Kugelpfanne 18 weiterbewegen, wobei lediglich die zwischen dem Mitnehmerelement 28 und der Kupplungseinheit 14 wirkende Feder 30 stärker gespannt wird. Wird die Blockade der Kupplungseinheit 14 durch die Weiterbewegung der Kugelpfanne 18 aufgehoben, so folgt die Kupplungseinheit 14 in ihrer Schwenkbewegung dem Mitnehmerelement 28 nach.

Ab einem vorbestimmten Schwenkwinkel der Kupplungseinheit 14 um die Achse A ist der Kugelkopf 16 soweit in die Kugelpfanne 18 hinein bewegt worden, dass das nachlaufenden Ende 18b der Kugelpfanne 18 mit dem Kugelkopf 16 in Kontakt tritt und das weitere Verschwenken der Kupplungseinheit 14 übernimmt. In diesem Zustand setzt das vorauslaufende Ende 18a der Kugelpfanne 18 außer Eingriff mit dem Mitnehmerelement 28. Auf diese Weise erreicht die Kupplungseinheit 14 schließlich die in Figur 1 dargestellte Kupplungsstellung.

Wird die Kugelpfanne 18, wie in Figur 4 dargestellt, in einer relativ hohen Lage relativ zum Gehäusekörper 12 an die Anhängekupplung 10 herangeführt, so läuft sie mit ihrem oberen Ende 18c gegen die schräg nach unten weisende Fläche 36a des Fangmauls 36 der Anhängekupplung 10 an. An dieser Fläche 36a gleitet die Kugelpfanne 18 entlang, bis sie in Kontakt mit dem Mitnehmerelement 28 gelangt. Allerdings gelangt die Kugelpfanne 18 in diesem Fall nicht mit dem Brückenteil 28c des Mitnehmerelements 28 in Kontakt, sondern mit den freien Enden der Seitenteile 28b. Wird die Kugelpfanne 18 nicht mittig an die Anhängekupplung 10 herangeführt, sondern eher seitlich, so kann es sogar geschehen, dass die Kugelpfanne 18 anfänglich nur mit dem freien Ende eines der Seitenteile 28b des Mitnehmerelements 28 in Kontakt tritt. Bezüglich des weiteren Ablaufs der Annäherungsbewegung der Kugelpfanne 18 an die Anhängekupplung 10 kann auf die vorstehende Erläuterung des Ankuppelvorgangs mit tiefer Relativlage der Kugelpfanne 18 relativ zu Anhängekupplung 10 gemäß Figur 3 verwiesen werden.

Nachzutragen ist noch, dass die Auffahrrampe 34 an ihrem in den Gehäusekörper 12 hineinragenden Ende mittig eine Ausnehmung 34b aufweist, die es dem Kugelkopf 16 erlaubt, in einem unterhalb der Auffahrrampe 34 vorgesehenen Raum 12a des Gehäusekörpers 12 aufgenommen zu werden (siehe Figur 3).

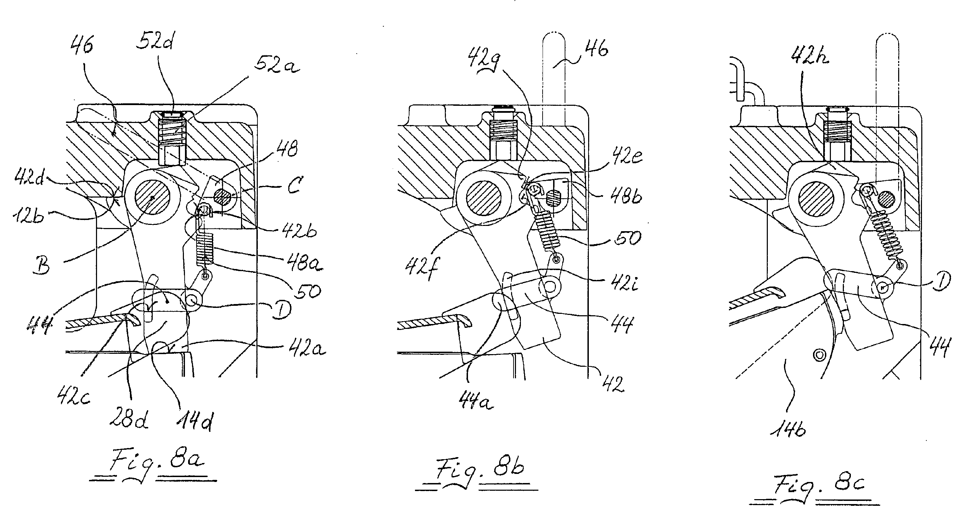

Wie in Figur 1 dargestellt ist, wird die Kupplungseinheit 14 durch eine Sicherungsvorrichtung 40 in ihrer Kupplungsstellung gehalten und gesichert. Aufbau und Funktion dieser Sicherungsvorrichtung 40 sollen im folgenden mit Bezug auf die Figuren 1 und 8a bis 8e näher erläutert werden.

Die Sicherungsvorrichtung 40 umfasst ein Sicherungselement bzw. einen Sicherungshebel 42, der an dem Gehäusekörper 12 um eine im Wesentlichen in Querrichtung Q verlaufende Achse B schwenkbar gelagert ist. Das freie Ende 42a des Sicherungshebels 42 steht dann, wenn sich die Kupplungseinheit 14 in ihrer Kupplungsstellung befindet, mit einer Anlagefläche 14d des zweiten L-Stegs 14b der Kupplungseinheit 14 in Kontakt. Auf diese Weise verhindert der Sicherungshebel 42 formschlüssig, dass sich die Kupplungseinheit 14 in unerwünschter Weise selbsttätig aus der Kupplungsstellung herausbewegt. Der Vollständigkeit halber sei an dieser Stelle darauf hingewiesen, dass der Sicherungshebel 42 in dieser Sicherungsstellung in der von den beiden Seitenteilen 28b und dem Brückenteil 28c des Mitnehmerelements 28 gebildeten Ausnehmung 28d aufgenommen ist (siehe Figur 8a).

Um verhindern zu können, dass der Sicherungshebel 42 zufällig und unbeabsichtigt aus der Sicherungsstellung gemäß Figuren 1 und 8a ausgelenkt wird, ist ein Sperrelement bzw. ein Arretiernocken 48 vorgesehen, der mit einer Nase 48a an einer ersten Sperrfläche 42b des Sicherungshebels 42 anliegt. Die Sicherungsstellung des Sicherungshebels 42 ist ferner durch gegenseitige Anlage einer Anlagefläche 42d des Sicherungshebels 42 und einer Anlagefläche 12b des Gehäusekörpers 12 festgelegt.

Der Arretiernocken 48 ist mit einem Handbetätigungshebel 46 relativ zu diesem drehfest, jedoch mit diesem um die im Wesentlichen in Querrichtung verlaufende Achse C schwenkbar verbunden. Ferner wird der Arretiernocken 48 mittels einer Feder 50 in diese Verriegelungsstellung vorgespannt. Mit ihrem einen Ende greift die Feder 50 an einer Stelle des Arretiernocken 48 an, die zwischen der Schwenkachse C und der Nase 48a angeordnet ist. Mit ihrem anderen Ende greift die Feder 50 an einem Auslöseelement bzw. Klinkenelement 44 an, das an dem Sicherungshebel 42 um eine im Wesentlichen in Querrichtung Q verlaufende Achse D schwenkbar gelagert ist. Unter der Wirkung der Feder 50 wird dieses Klinkenelement 44 gegen einen Anschlag 42c des Sicherungshebels 42 vorgespannt.

Soll nun das Nachlauffahrzeug 22 von dem Zugfahrzeug 26 abgekuppelt werden, so ergreift eine Bedienungsperson den Handbetätigungshebel 46 und verschwenkt diesen um die Achse C in der Zeichnung im Uhrzeigersinn in die in Figur 8b dargestellte Stellung. Infolge dieser Betätigung gibt die Nase 48a des Sperrnocken 48 die erste Sperrfläche 42b des Sicherungshebels 42 frei und tritt mit der Steuerfläche 42f in Kontakt, wobei die Feder 50 die ständige Anlage von Steuerfläche 42f und Nase 48a sicherstellt. Durch das Zusammenwirken von Nase 48a und Steuerfläche 42f wird der Sicherungshebel 42 in seine Freigabestellung verschwenkt, in der er sich außerhalb des Schwenkwegs der Kupplungseinheit 14 befindet. In dieser Freigabestellung liegt der Sicherungshebel 42 mit einer zweiten Sperrfläche 42e seitlich an der Nase 48a des Sperrnocken 48 an.

Um verhindern zu können, dass der Sperrnocken 48 beim Verschwenken des Handbetätigungshebels 46 außer Eingriff mit dem Sicherungshebel gelangt, ist an dem Sperrnocken 48 ein Vorsprung 48b vorgesehen, der am Gehäusekörper 12 anschlägt und ein weiteres Verschwenken des Handbetätigungshebels 46 unterbindet. Ferner ist der Sicherungshebel 42 der zweiten Sperrfläche 42e benachbart bei 42g so hoch ausgebildet, dass für die Nase 48a des Sperrnocken 48 stets eine gegenüberliegende Fläche des Sicherungshebels 42 vorgesehen ist.

Wie man in den Figuren 8b und 8c erkennt, ragt das Klinkenelement 44 mit seinem freien Ende 44a in den Schwenkweg der Kupplungseinheit 14, genauer gesagt des zweiten L-Stegs 14b der Kupplungseinheit 14, hinein. Beim Abkuppeln des Nachlauffahrzeugs 22 und der sich hieraus ergebenden Schwenkbewegung der Kupplungseinheit 14 entgegen dem Uhrzeigersinn um die Achse A kann die Kupplungseinheit 14 das Klinkenelement 44 aus seiner Anschlagstellung entgegen der Kraft der Feder 50 auslenken und sich so am Klinkenelement 44 vorbeibewegen, ohne dass dies einen Einfluss auf die Stellung des Sicherungshebels 42 hat. Der Sicherungshebel 42 verharrt bei dieser Bewegung in seiner Freigabestellung. Hat sich die Kupplungseinheit 14 am Klinkenelement 44 vorbeibewegt, so kehrt dieses unter der Vorspannung der Feder 50 in seine Anschlagstellung zurück. Um die Reibungskräfte zwischen dem Sicherungshebel 42 und dem Klinkenelement 44 gering halten zu können, weist der Sicherungshebel 42 eine leicht erhaben ausgebildete, gekrümmte Kulisse 42i auf, auf der das Klinkenelement 44 gleitet.

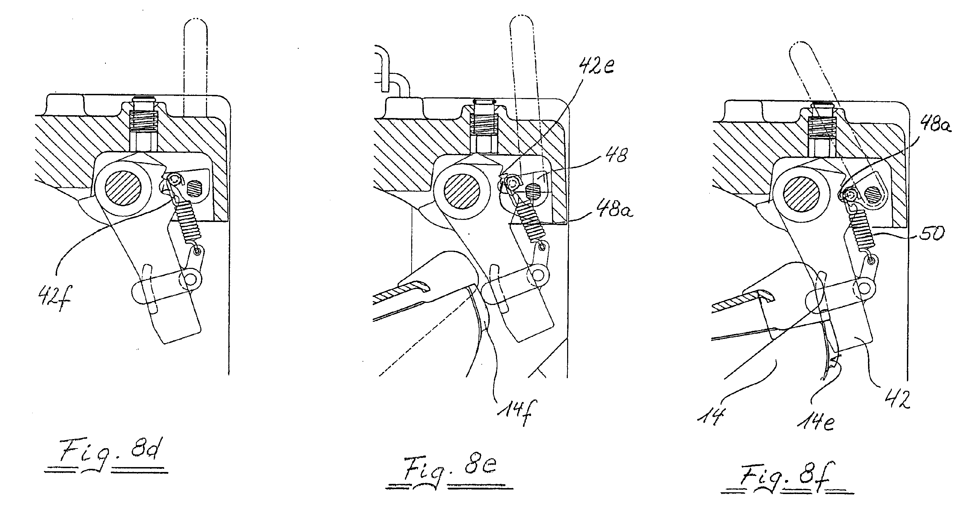

Der so erhaltende Zustand ist in Figur 8d dargestellt. Er entspricht dem abgekuppelten Zustand, in dem die Anhängekupplung 10 zugleich für das erneute Ankuppeln eines Nachlauffahrzeugs 22 bereit ist.

Wird nun erneut ein Nachlauffahrzeug 22 angekuppelt, wie dies vorstehend mit Bezug auf die Figuren 3 und 4 beschrieben worden ist, so gelangt der zweite L-Steg 14b der Kupplungseinheit 14 wiederum in den Bereich des Klinkenelements 44. Da sich dieses in der Anschlagstellung befindet und nunmehr einer Bewegung der Kupplungseinheit 14 im Uhrzeigersinn nicht ausweichen kann, verharrt das Klinkenelement 44 in seiner Stellung, so dass die Kupplungseinheit 14 nicht nur das Klinkenelement 44, sondern mit ihm den gesamten Sicherungshebel 42 aus dem Weg schwenken muss, wie dies in Figur 8e dargestellt ist. Im Zuge dieses Verschwenkens des Sicherungshebels 42 gelangt die Nase 48a des Arretiernocken 48 außer Eingriff mit der zweiten Sperrfläche 42e des Sicherungshebels 42 und tritt in Eingriff mit der Steuerfläche 42f des Sicherungshebels 42. Unter dem Einfluss der Feder 50 gleitet die Nase 48a an der Steuerfläche 42f entlang und verschwenkt hierdurch den Sicherungshebel 42 im Uhrzeigersinn.

Solange sich die Kupplungseinheit 14 noch im Bereich des Sicherungshebels 42 befindet, liegt dieser an der Stirnseite 14e des zweiten L-Stegs 14b der Kupplungseinheit 14 an, wie dies in Figur 8f dargestellt ist. Hat die Kupplungseinheit 14 ihre Kupplungsstellung erreicht, so kann der Sicherungshebel 42 an der Kupplungseinheit 14 vorbei wieder in Anlage mit der Anlagefläche 14d verschwenken, so dass sich wiederum der Zustand gemäß Figur 8a ergibt.

Gemäß Vorstehendem bedarf es lediglich einer einzigen, mit einer einzigen Hand auszuführenden Betätigung durch die Bedienungsperson, nämlich des Verschwenkens des Handbetätigungshebel 46 aus der in Figur 8a dargestellten Stellung in die in Figur 8b dargestellte Stellung, um die Anhängekupplung 10 in den für das Abkuppeln des Nachlauffahrzeugs 22 vorbereiteten Zustand überzuführen. Ferner verharrt die Anhängekupplung 10 nach dem Abkuppeln des Nachlauffahrzeugs 22 in dieser Stellung und ist somit für das erneute Ankuppelns eines Nachlauffahrzeugs 22 vorbereitet.

Der Kupplungszustand der Anhängekupplung 10 wird der Bedienungsperson durch eine Anzeigevorrichtung 52 angezeigt. Diese Anzeigevorrichtung 52 kann beispielsweise einen Anzeigestift 52a umfassen, der in einer Ausnehmung 52b des Gehäusekörpers 12 aufgenommen und mittels einer Feder 52c in die Ausnehmung 52b hinein vorgespannt ist. Der Sicherungshebel 42 weist einen Vorsprung 42h (siehe Figur 8c) auf, der auf den Anzeigestift 52a einwirkt und diesen entgegen der Vorspannkraft der Feder 52c aus der Ausnehmung 52b herausdrückt. Nur dann, wenn das obere Ende 52d des Anzeigestifts 52a mit dem Rand der Ausnehmung 52b bündig ist, wie dies in Figur 8a dargestellt ist, befindet sich die Anhängekupplung 10 bzw. deren Kupplungseinheit 14 im gekuppelten und gesicherten Zustand.

An dieser Stelle sei darauf hingewiesen, dass die Anhängekupplung 10 auch fernbetätigbar ausgebildet sein kann. Beispielsweise kann der Handbetätigungshebel an einer von der Anhängekupplung 10 entfernten Position angeordnet werden und auf die den Spernocken 48 tragende und die Schwenkachse C bildende Welle über einen Bowdenzug einwirken. Zusätzlich oder alternativ ist es jedoch auch möglich, den Handbetätigungshebel 46 durch einen motorischen Antrieb zu ersetzen, beispielsweise einen Elektromotor, ein Pneumatik- und/oder Hydraulik-Aggregat oder dergleichen, der den Arretiernocken 48 aus der in Figur 8a dargestellten Stellung in die in Figur 8b dargestellte Stellung überführt. In allen Fällen kann die Anzeigevorrichtung 52 durch einen Sensor ersetzt oder ergänzt werden, der eine entsprechende Anzeige in der Nähe eines Schalters zur Betätigung des motorischen Antriebs ansteuert.

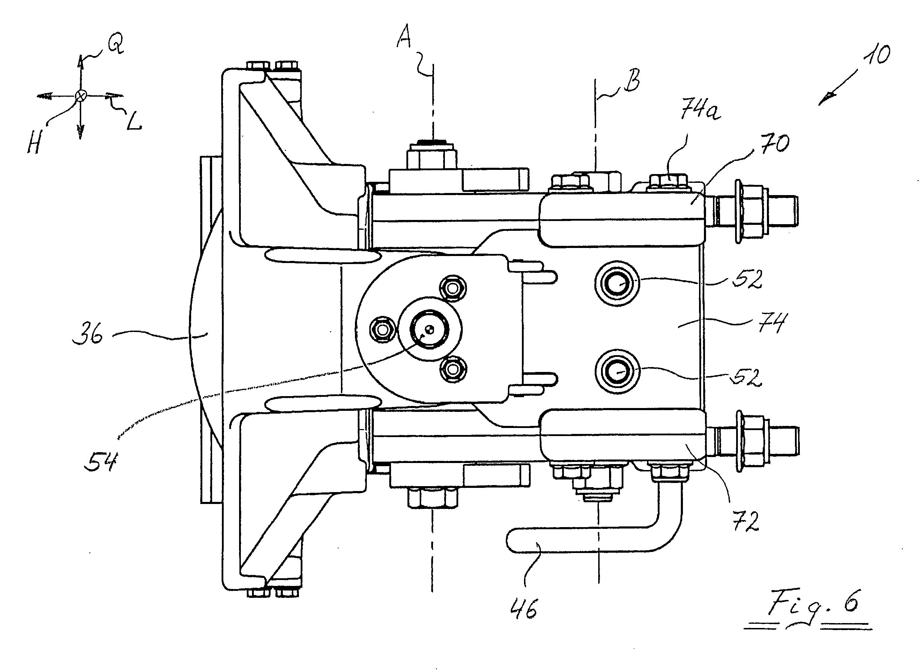

Ferner sei darauf hingewiesen, dass die erfindungsgemäße Anhängekupplung 10 über zwei getrennte Sicherungsvorrichtungen 40 verfügen kann. So erkennt man beispielsweise in der Draufsicht gemäß Figur 6 die beiden Anzeigevorrichtungen 52 dieser beiden Sicherungsvorrichtungen 40. Obgleich dies bevorzugt ist, brauchen die beiden Sicherungsvorrichtungen 40 nicht vollständig getrennt voneinander ausgebildet zu sein. Vielmehr ist es denkbar, dass das Klinkenelement 44 den Sicherungshebeln 42 beider Sicherungsvorrichtungen 40 gemeinsam zugeordnet ist. So kann der die Achse D bildende Stift die beiden Sicherungshebel 42 miteinander verbinden, wobei das Klinkenelement 44 zwischen den beiden Sicherungshebeln 42 angeordnet sein kann. In diesem Fall kann an der Stirnfläche 14e der Kupplungseinheit 14 mittig eine gesonderte Nase 14f (siehe Figur 8e) zum Eingriff mit dem Klinkenelement 44 vorgesehen sein. Ferner können in diesem Fall zwei Federn 50 vorgesehen sein.

Wie in Figur 1 anhand strichpunktierter Linien zu erkennen ist, ist die Mitte des Kugelkopfs 16 nicht exakt vertikal über der Schwenkachse A der Kupplungseinheit 14 angeordnet, sondern ist in Fahrtrichtung gesehen leicht hinter der Schwenkachse A angeordnet. Dabei beträgt der horizontale Abstand X der Mitte des Kugelkopfs 16 von der Schwenkachse A, d.h. der Abstand der in vertikaler Richtung genommenen Projektion der Mitte des Kugelkopfs 16 in eine die Schwenkachse A enthaltende, horizontale Ebene von der Schwenkachse A, vorzugsweise höchstens 1/40 des Durchmessers des Kugelkopfs 16, d.h. bei einem Kugelkopf von 80 mm Durchmesser höchstens 2 mm. Allgemein sind für den Durchmesser des Kugelkopfs 16 Werten zwischen 80 mm und 110 mm üblich. Durch diese Ausgestaltung können die auf den bzw. die Sicherungshebel 42 ausgeübten Kräfte gering gehalten werden. Insbesondere wird die dynamische Vertikallast der Kugelpfanne 18 im Fahrbetrieb bzw. deren statische Stützlast bei Stillstand von Zugfahrzeug 26 und Nachlauffahrzeug 22 im Wesentlichen vollständig in die Schwenkachse A der Kupplungseinheit 14 eingeleitet und brauchen nicht von dem Sicherungshebel 42 aufgenommen zu werden.

Um andererseits aber sicherstellen zu können, dass die dynamische Vertikallast der Kugelpfanne 18 im Fahrbetrieb bzw. deren statische Stützlast bei Stillstand von Zugfahrzeug 26 und Nachlauffahrzeug 22 die Kupplungseinheit 14 stets in Anlage am Sicherungshebel 42 hält, kann das Verhältnis Y/X des horizontalen Abstands Y zwischen der Schwenkachse A der Kupplungseinheit 14 und der Mitte der Anlagefläche 14d zwischen Sicherungshebel 42 und Kupplungseinheit 14 zu dem vorstehend definierten horizontalen Abstand X der Mitte des Kugelkopfs 16 von der Schwenkachse A einen Wert von zwischen etwa 25 und etwa 70 aufweisen. Da sich die Mitte des Kugelkopfs 16 und die Mitte der Anlagefläche 14d auf unterschiedlichen Seiten der Schwenkachse A befinden, versucht die Vertikallast der Kugelpfanne 18 stets, die Kupplungseinheit 14 aus der Kupplungsstellung in Richtung der Lösestellung zu verschwenken.

Wie in Figur 1 dargestellt ist, verfügt die Anhängekupplung 10 ferner über zwei Ausgleichsvorrichtungen, nämlich eine Ausgleichsvorrichtung 54 zum Ausgleich des vertikalen Kupplungsspiels zwischen dem Kugelkopf 16 und der Kugelpfanne 18 und eine Ausgleichsvorrichtung 56 zum Ausgleich des Bewegungsspiels der Kupplungseinheit 14 in ihrer Kupplungsstellung.

Die Ausgleichsvorrichtung 54 ist in einer Ausnehmung 54a des Kupplungsgehäuses 12 oberhalb jener Position angeordnet, die der Kugelkopf 16 in der Kupplungsstellung der Kupplungseinheit 14 einnimmt. Die Verlängerung der Achse der Ausgleichsvorrichtung 54 verläuft dabei durch die Mitte des Kugelkopfs 16. Um ein eingestelltes Spiel sicher festlegen zu können, ist die Ausnehmung 54a geschlitzt ausgebildet und sind zwei Klemmschrauben 54b zur Einengung des Schlitzes vorgesehen.

Das Fangmaul 36 ist um eine in Höhenrichtung H verlaufende Achse schwenkbar an dem Gehäusekörper 12 gelagert. Diese Achse verläuft vorteilhafterweise durch die Mitte des Kugelkopfs 16, wenn sich Kupplungseinheit 14 in der Kupplungsstellung befindet. Daher ist erfindungsgemäß vorgesehen, dass die die Ausnehmung 54a der Ausgleichsvorrichtung 54 bildende Aufnahme 54c des Gehäusekörpers 12 gleichzeitig das obere Schwenklager für das Fangmaul 36 bildet. In Figur 1 erkennt man ferner die Rückstellfeder 56, die das Fangmaul 36 in seiner mittigen, entgegen der Fahrtrichtung F gerichteten Stellung zu halten versucht. Ferner ist in Figur 1 auch das untere Schwenklager 58 des Fangmauls 36 dargestellt. Genauer gesagt umfasst das Fangmaul 36 einen oberen Abschnitt 36a, der auf der genannten Aufnahme 54c schwenkbar gelagert ist, und einen unteren Abschnitt 36b, der mittels des unteren Schwenklagers 58 schwenkbar gelagert ist. Die beiden Abschnitte 36a und 36b sind mittels zweier Schraubverbindungen 36c aneinander befestigt.

Um verhindern zu können, dass sich das Fangmaul 36 im ankuppelbereiten Zustand der Anhängekupplung 10 aus seiner zentrierten Schwenkstellung herausbewegt, umfasst die Anhängekupplung 10 ferner zwei Rasthebel 60, die von hinten am Fangmaul 36 angreifen und Fixierungselemente für das Fangmaul 36 bilden. Die beiden Rasthebel 60 sind ebenfalls auf der Achse A schwenkbar gelagert, wobei sie über Formschlussmittel 60a drehfest mit der Kupplungseinheit 14 verbunden sind (siehe auch Figur 7). Diese Formschlussmittel 60a sind als Vorsprünge an Hülsen 60b ausgebildet, die seitlich von den Rasthebeln 60 abstehen, die Seitenteile 28b des Mitnehmerelements 28 durchsetzen und in zugeordnete Ausnehmungen 14g der Kupplungseinheit 14 eingreifen.

Durch die drehfeste Verbindung der Rasthebel 60 mit der Kupplungseinheit 14 spannt die Drehfeder 32 auch die Rasthebel 60 vor, und zwar in der Darstellung der Figur 1 entgegen dem Uhrzeigersinn, d.h. auf das Fangmaul 36 zu. Somit unterstützt die Drehfeder 32 unter Vermittelung des Eingriffs eines der Rasthebel 60 am Fangmaul 36 die Rückstellfeder 56 in ihrem Bemühen, das Fangmaul 36 in seine zentrierte Stellung überzuführen. Hat das Fangmaul 36 diese zentrierte Stellung erreicht, so liegen beide Rasthebel 60 am Fangmaul 36 unter der Vorspannung durch die Drehfeder 32 an und halten dieses in der zentrierten Stellung.

Nachzutragen ist noch, dass der Gehäusekörper 12 der Anhängekupplung 10 erfindungsgemäß kein Schmiedeteil zu sein braucht, sondern aus einer Mehrzahl von Gehäuseplatten zusammengesetzt sein kann. So umfasst der Gehäusekörper 12 zwei seitliche Gehäuseplatten 70 und 72, an denen die Befestigungsbolzen 24 für die Befestigung der Anhängekupplung 10 am Zugfahrzeug 26 angeordnet sind (siehe auch Figur 6) und an denen die Auffahrrampe 34 über zwei Befestigungsbolzen 34c angebracht ist. Ferner umfasst der Gehäusekörper eine obere Gehäuseplatte 74, in welcher die Ausnehmung 52b für den Anzeigestift 52a der Anzeigevorrichtung 52 ausgebildet ist und welche die Aufnahme für die Ausgleichsvorrichtung 54 zum Ausgleich des vertikalen Kupplungsspiels aufweist, die gleichzeitig als oberes Schwenklager für das Fangmaul 36 dient. Die obere Gehäuseplatte 74 kann gemäß dem dargestellten Ausführungsbeispiel über beispielsweise zwei Schraubbolzen 74a mit den beiden seitlichen Gehäuseplatten 70, 72 verbunden sein. Schließlich umfasst der Gehäusekörper 12 auch zwei untere Gehäuseplatten 76 und 78. Die hintere untere Gehäuseplatte 76 trägt das untere Schwenklager 58 des Fangmauls 36 und kann über beispielsweise zwei Schraubbolzen 76a mit den beiden seitlichen Gehäuseplatten 70, 72 verbunden sein, während die vordere untere Gehäuseplatte 78 die Ausgleichsvorrichtung 56 zum Ausgleich des bewegungsspiels der Kupplungseinheit 14 trägt und über beispielsweise zwei Schraubbolzen 78a mit den beiden seitlichen Gehäuseplatten 70, 72 verbunden sein kann. Zur Erhöhung der Querstabilität des Gehäusekörpers 12 kann wenigstens eine der oberen und unteren Gehäuseplatten 74, 76 und 78, in dem dargestellten Ausführungsbeispiel die vordere untere Gehäuseplatte 78, schräg nach oben verlaufen. Grundsätzlich ist es jedoch auch denkbar, die beiden unteren Gehäuseplatten 76 und 78 einstückig als eine einzige Gehäuseplatte auszubilden.

Ferner ist zu Figur 7 noch nachzutragen, dass die Schwenkachse A von einem Rohr 80 gebildet sein kann, welches durch einen Durchgang 14h die Kupplungseinheit 14 hindurchgesteckt ist und diese frei verdrehbar trägt. Von außerhalb der seitlichen Gehäuseplatten 70, 72 sind die Rasthebel 60 mit ihren Hülsen 60b auf das Rohr 80 aufgesteckt. Die gesamte Anordnung wird mittels eines Schraubbolzens 82 zusammengehalten.

## Patentansprüche

1. Anhängekupplung (10) für ein Zugfahrzeug (26), umfassend
- einen Grundkörper (12),
- eine Kupplungseinheit (14) mit einem Kupplungselement (16), welches zum Zusammenwirken mit einem Gegenkupplungselement (18) eines Nachlauffahrzeugs (22) bestimmt ist, wobei die Kupplungseinheit (14) relativ zu dem Grundkörper (12) zwischen einer Kupplungsstellung und einer Lösestellung verstellbar ist, und
- eine Sicherungsvorrichtung (40) mit einem Sicherungselement (42), welches zwischen einer Sicherungsstellung und einer Freigabestellung verstellbar ist, wobei es in seiner Sicherungsstellung die Kupplungseinheit (14) in deren Kupplungsstellung sichert,
**dadurch gekennzeichnet, dass** das Sicherungselement (42) in seiner Freigabestellung eine Überführung der Kupplungseinheit (14) aus deren Kupplungsstellung in deren Lösestellung zulässt, und dass das Sicherungselement (42) durch die Kupplungseinheit (14) im Verlauf von deren Bewegung aus der Lösestellung in die Kupplungsstellung aus der Freigabestellung ausgelenkt und in einen Sicherungsstellungsvorbereitungszustand übergeführt wird und dann, wenn die Kupplungseinheit (14) die Kupplungsstellung erreicht hat, selbsttätig in die Sicherungsstellung übergeht.

2. Anhängekupplung nach Anspruch 1,
**dadurch gekennzeichnet, dass** an dem Sicherungselement (42) ein Auslöseelement (44) bewegbar gelagert ist, welches in eine Anschlagstellung vorgespannt ist, wobei das Auslöseelement (44) von der Kupplungseinheit (14) bei deren Bewegung aus der Kupplungsstellung in die Lösestellung unter Belassung des Sicherungselements (42) in dessen Freigabestellung aus der Anschlagstellung ausgelenkt wird, während es bei einer Bewegung der Kupplungseinheit (14) aus deren Lösestellung in deren Kupplungsstellung relativ zum Sicherungselement (42) in der Anschlagstellung verharrt und das Sicherungselement (42) in den Sicherungsstellungsvorbereitungszustand überführt.

3. Anhängekupplung nach Anspruch 1 oder 2,
**dadurch gekennzeichnet, dass** die Sicherungsvorrichtung (40) ferner ein Sperrelement (48) umfasst, welches zwischen einer Verriegelungsstellung und einer Entriegelungsstellung verstellbar ist, wobei das Sperrelement (48) in seiner Verriegelungsstellung das Sicherungselement (42) in dessen Sicherungsstellung hält, und bei seiner Verstellung in die Entriegelungsstellung das Sicherungselement (42) in dessen Freigabestellung überführt.

4. Anhängekupplung nach Anspruch 3,
**dadurch gekennzeichnet, dass** das Sperrelement (48) in seiner Entriegelungsstellung an dem Sicherungselement (42) verrastet ist.

5. Anhängekupplung nach Anspruch 4,
**dadurch gekennzeichnet, dass** die Verrastung bei der Überführung des Sicherungselements (42) aus seiner Freigabestellung in den Sicherungsstellungsvorbereitungszustand gelöst wird.

6. Anhängekupplung nach einem der Ansprüche 3 bis 5,
**dadurch gekennzeichnet, dass** das Sperrelement (48) in seine Verriegelungsstellung vorgespannt ist.

7. Anhängekupplung nach einem der Ansprüche 3 bis 6,
**dadurch gekennzeichnet, dass** das Sperrelement (48) bei seiner Verstellung in die Verriegelungsstellung das Sicherungselement (42) in dessen Sicherungsstellung überführt.

8. Anhängekupplung nach einem der Ansprüche 3 bis 7,
**dadurch gekennzeichnet, dass** Antriebsmittel (46) vorgesehen sind, welche das Sperrelement (48) aus seiner Verriegelungsstellung in seine Entriegelungsstellung verstellen, beispielsweise ein Handbetätigungshebel.

9. Anhängekupplung nach einem der Ansprüche 3 bis 8,
**dadurch gekennzeichnet, dass** eine Vorspannvorrichtung (50), vorzugsweise eine Vorspannfeder, vorgesehen ist, welche wenigstens zwei der folgenden Funktionen übernimmt, vorzugsweise alle diese Funktionen:
a) das Auslöseelement (44) in dessen Anschlagstellung vorspannt,
b) das Sperrelement (48) in seine Verriegelungsstellung vorspannt, und
c) den Eingriff von Sperrelement (48) und Sicherungselement (42) sichert.

10. Anhängekupplung nach einem der Ansprüche 1 bis 9,
**dadurch gekennzeichnet, dass** das Sicherungselement (42) am Grundkörper (12) oder/und das Auslöseelement (44) am Sicherungselement (42) oder/und das Sperrelement (48) am Grundkörper (12) schwenkbar gelagert ist/sind.

11. Anhängekupplung nach einem der Ansprüche 1 bis 10,
**dadurch gekennzeichnet, dass** eine Anzeigevorrichtung (52) vorgesehen ist, welche anzeigt, ob sich das Sicherungselement (42) in der Sicherungsstellung befindet.

12. Anhängekupplung nach Anspruch 11,
**dadurch gekennzeichnet, dass** die Anzeigevorrichtung (52) einen Anzeigestift (52a) umfasst, der durch das Sicherungselement (42) aus einer Stellung auslenkbar ist, in welcher er anzeigt, dass sich das Sicherungselement (42) in der Sicherungsstellung befindet.

13. Anhängekupplung nach Anspruch 11 oder 12,
**dadurch gekennzeichnet, dass** der Anzeigevorrichtung (52) eine Sensoreinheit zugeordnet ist.

14. Anhängekupplung nach einem der Ansprüche 1 bis 13,
**dadurch gekennzeichnet, dass** sie zwei Sicherungsvorrichtungen (40) umfasst.

15. Anhängekupplung nach Anspruch 2 und Anspruch 14 und gewünschtenfalls einem der Ansprüche 3 bis 13,
**dadurch gekennzeichnet, dass** das Auslöseelement (44) den Sicherungselementen (42) beider Sicherungsvorrichtungen (40) gemeinsam zugeordnet ist.

## Claims

1. Tow bar (10) for a towing vehicle (26), comprising:
- a base body (12);
- a coupling unit (14) having a coupling element (16) which is intended to interact with a counter coupling element (18) of a trailing vehicle (22), the coupling unit (14) being adjustable relative to the base body (12) between a coupling position and a detached position; and
- a securing device (40) having a securing element (42) which is adjustable between a securing position and a release position, said securing element, when in its securing position, securing the coupling unit (14) in its coupling position,
**characterised in that** the securing element (42), when in its release position, allows a transfer of the coupling unit (14) from its coupling position into its detached position, and **in that** the securing element (42) is deflected out of the release position by the coupling unit (14) during the movement thereof from the detached position into the coupling position, is transferred into a securing-position preparatory state and automatically passes into the securing position when the coupling unit (14) has reached the coupling position.

2. Tow bar according to claim 1, **characterised in that** a triggering element (44) is movably mounted on the securing element (42), which triggering element is biased into a contact position, the triggering element (44) being deflected out of the contact position by the coupling unit (14) during the movement thereof out of the coupling position into the detached position while leaving the securing element (42) in its release position, whereas said triggering element remains in the contact position relative to the securing element (42) when the coupling unit (14) moves out of its detached position into its coupling position, and the triggering element transfers the securing element (42) into the securing-position preparatory state.

3. Tow bar according to either claim 1 or claim 2, **characterised in that** the securing device (40) further comprises a locking element (48) which is adjustable between a locking position and an unlocking position, the locking element (48), when in its locking position, holding the securing element (42) in its securing position, and, when adjusted into the unlocking position, transferring the securing element (42) into its release position.

4. Tow bar according to claim 3, **characterised in that** the locking element (48), when in its unlocking position, is latched on the securing element (42).

5. Tow bar according to claim 4, **characterised in that** the latch is released when the securing element (42) is transferred from its release position into the securing-position preparatory state.

6. Tow bar according to any of claims 3 to 5, **characterised in that** the locking element (48) is biased into its locking position.

7. Tow bar according to any of claims 3 to 6, **characterised in that** the locking element (48), when adjusted into the locking position, transfers the securing element (42) into its securing position.

8. Tow bar according to any of claims 3 to 7, **characterised in that** drive means (46), for example a hand-operated lever, are provided which adjust the locking element (48) out of its locking position into its unlocking position.

9. Tow bar according to any of claims 3 to 8, **characterised in that** a biasing device (50), preferably a bias spring, is provided which carries out at least two, preferably all, of the following functions:
a) biases the triggering element (44) into its contact position;
b) biases the locking element (48) into its locking position; and
c) secures the engagement of the locking element (48) and securing element (42).

10. Tow bar according to any of claims 1 to 9, **characterised in that** the securing element (42) is pivotally mounted on the base body (12) and/or the triggering element (44) is pivotally mounted on the securing element (42) and/or the locking element (48) is pivotally mounted on the base body (12).

11. Tow bar according to any of claims 1 to 10, **characterised in that** a display device (52) is provided which displays whether the securing element (42) is in the securing position.

12. Tow bar according to claim 11, **characterised in that** the display device (52) comprises a display pin (52a) which can be deflected by the securing element (42) out of a position in which said display pin displays that the securing element (42) is in its securing position.

13. Tow bar according to either claim 11 or claim 12, **characterised in that** a sensor unit is assigned to the display device (52).

14. Tow bar according to any of claims 1 to 13, **characterised in that** the tow bar comprises two securing devices (40).

15. Tow bar according to claim 2 and claim 14, and, if desired, to any of claims 3 to 13, **characterised in that** the triggering element (44) is jointly assigned to the securing elements (42) of the two securing devices (40).

## Revendications

1. Attelage (10) pour un véhicule de traction (26), comprenant:
- un corps de base (12),
- une unité de couplage (14) avec un élément de couplage (16), qui est destiné à coopérer avec un élément de couplage conjugué (18) d'un véhicule remorqué (22), l'unité de couplage (14) pouvant être déplacée par rapport au corps de base (12) entre une position de couplage et une position de séparation, et
- un dispositif de sécurisation (40) avec un élément de sécurisation (42), qui est déplaçable entre une position de sécurisation et une position de libération, cet élément sécurisant, dans sa position de sécurisation, l'unité de couplage (14) dans sa position de couplage,
**caractérisé en ce que** l'élément de sécurisation (42) permet, dans sa position de libération, un transfert de l'unité de couplage (14) de sa position de couplage à sa position de séparation, et **en ce que** l'élément de sécurisation (42) est dévié hors de la position de libération et il est amené dans un état de préparation de la position de sécurisation par l'unité de couplage (14) au cours du mouvement de celle-ci de la position de séparation à la position de couplage et il se porte automatiquement dans la position de sécurisation lorsque l'unité de couplage (14) a atteint la position de couplage.

2. Attelage selon la revendication 1, **caractérisé en ce qu'**un élément de déclenchement (44), qui est précontraint dans une position de butée, est monté de façon mobile sur l'élément de sécurisation (42), dans lequel l'élément de déclenchement (44) est dévié hors de la position de butée par l'unité de couplage (14) lors du mouvement de celle-ci de la position de couplage à la position de séparation en laissant l'élément de sécurisation (42) dans sa position de libération, tandis qu'il demeure dans la position de butée lors d'un mouvement de l'unité de couplage (14) de sa position de séparation à sa position de couplage par rapport à l'élément de sécurisation (42) et transfère l'élément de sécurisation (42) dans l'état de préparation de la position de sécurisation.

3. Attelage selon la revendication 1 ou 2, **caractérisé en ce que** le dispositif de sécurisation (40) comprend en outre un élément de blocage (48), qui est déplaçable entre une position de verrouillage et une position de déverrouillage, dans lequel l'élément dd blocage (48) dans sa position de verrouillage maintient l'élément de sécurisation (42) dans sa position de sécurisation et, lors de son déplacement dans la position de déverrouillage, il transfère l'élément de sécurisation (42) dans sa position de libération.

4. Attelage selon la revendication 3, **caractérisé en ce que** l'élément de blocage (48) dans sa position de déverrouillage est encliqueté sur l'élément de sécurisation (42).

5. Attelage selon la revendication 4, **caractérisé en ce que** l'encliquetage est levé lors du transfert de l'élément de sécurisation (42) de sa position de libération à l'état de préparation de la position de sécurisation.

6. Attelage selon l'une quelconque des revendications 3 à 5, **caractérisé en ce que** l'élément de blocage (48) est précontraint dans sa position de verrouillage.

7. Attelage selon l'une quelconque des revendications 3 à 6, **caractérisé en ce que** l'élément de blocage (48) transfère l'élément de sécurisation (42) dans sa position de sécurisation lors de son déplacement dans la position de verrouillage.

8. Attelage selon l'une quelconque des revendications 3 à 7, **caractérisé en ce qu'**il est prévu des moyens d'entraînement (46), qui déplacent l'élément de blocage (48) de sa position de verrouillage à sa position de déverrouillage, par exemple un levier d'actionnement manuel.

9. Attelage selon l'une quelconque des revendications 3 à 8, **caractérisé en ce qu'**il est prévu un dispositif de précontrainte (50), de préférence un ressort de précontrainte, qui assure au moins deux des fonctions suivantes, de préférence toutes ces fonctions:
a) il précontraint l'élément de déclenchement (44) dans sa position de butée,
b) il précontraint l'élément de blocage (48) dans sa position de verrouillage, et
c) il sécurise l'engagement de l'élément de blocage (48) et de l'élément de sécurisation (42).

10. Attelage selon l'une quelconque des revendications 1 à 9, **caractérisé en ce que** l'élément de sécurisation (42) est monté de façon pivotante sur le corps de base (12) et/ou l'élément de déclenchement (44) est monté de façon pivotante sur l'élément de sécurisation (42) et/ou l'élément de blocage (48) est monté de façon pivotante sur le corps de base (12).

11. Attelage selon l'une quelconque des revendications 1 à 10, **caractérisé en ce qu'**il est prévu un dispositif d'affichage (52), qui indique si l'élément de sécurisation (42) se trouve dans la position de sécurisation.

12. Attelage selon la revendication 11, **caractérisé en ce que** le dispositif d'affichage (52) comprend une tige d'affichage (52a), qui peut être déviée par l'élément de sécurisation (42) hors d'une position, dans laquelle elle indique que l'élément de sécurisation (42) se trouve dans la position de sécurisation.

13. Attelage selon la revendication 11 ou 12, **caractérisé en ce qu'**une unité de capteurs est associée au dispositif d'affichage (52).

14. Attelage selon l'une quelconque des revendications 1 à 13, **caractérisé en ce qu'**il comprend deux dispositifs de sécurisation (40).

15. Attelage selon la revendication 2 et la revendication 14 et si on le désire selon l'une quelconque des revendications 3 à 13, **caractérisé en ce que** l'élément de déclenchement (44) est associé en commun aux éléments de sécurisation (42) des deux dispositifs de sécurisation (40).
